# EUROPEAN PATENT APPLICATION

(11) **EP 1 123 728 A1**
(43) Date of publication of application: **16.08.2001**
(21) Application number: 01101399.2
(22) Date of filing: 23.01.2001
(51) Int. Cl.: B01D 53/94, B01D 53/86, F01N 3/022, F01N 3/28

(54) **Device for reducing atmospheric pollution due to exhaust gases**

(30) Priority: 08.02.2000 IT TO000126
(71) Applicant: Pellegrino, Luigi, 10090 Rivalba (IT)
(72) Inventor: Pellegrino, Luigi, 10090 Rivalba (IT)
(74) Representative: Marchitelli, Mauro

(57) **Abstract**

The device for reducing atmospheric pollution due to exhaust gases comprises a cylindrical casing (2) provided with an inlet (4) for the exhaust gases to be purified and an outlet (6) for the purified exhaust gases; a tubular purification cartridge (8) which is housed inside the casing (2), is set between the inlet (4) and the outlet (6), and comprises mineral fibres (41) which in turn comprise at least 70 wt% of silicon dioxide and at least one of the following metals: platinum in an amount from 0.001 to 0.5 g per gram of fibre, rhodium in an amount of from 0.00003 to 0.05 g per gram of fibre, and palladium in an amount of from 0.00003 to 0.5 g per gram of fibre.

## Description

The present invention relates to a device for reducing atmospheric pollution due to exhaust gases.

In particular, the present invention finds an advantageous, but not exclusive, application in the treatment of exhaust gases produced by any type of internal-combustion engine, whether a Diesel-cycle engine or an Otto-cycle engine, installed on motor vehicles or in fixed systems, as well as for the treatment of exhaust gases produced by boilers for industrial, commercial and residential heating systems.

As is known, in exhaust gases produced by internal-combustion engines, and in particular by diesel engines, there are present numerous harmful substances, such as unburnt hydrocarbons, particulate, nitrogen oxides and carbon oxides, etc.

Numerous systems and devices have been designed for reducing atmospheric pollution resulting from exhaust gases produced by internal-combustion engines.

In general, the above-mentioned systems and devices are of the type comprising a hollow casing provided, at its ends, with an inlet for the exhaust gases to be purified and an outlet for the exhaust gases that have been purified, as well as with purifying means set between the inlet and the outlet.

As purifying means it is, for example, known from the European patent EP-B-0340784 that a tubular cartridge may be used made up of a tubular pad containing purifying mineral fibres and supported by a basket made up of two coaxial tubular bodies made of rigid mesh, between which the pad is set. In particular, the pad is obtained by arranging the mineral fibres on a stocking of woven filiform material consisting of a plurality of elastically deformable free loops conveniently obtained by mechanical weaving of a stainless-steel wire and by winding into a spiral.

Cartridge devices of the type described above, albeit particularly advantageous from the cost point of view, present a drawback that does not enable adequate exploitation of all the advantages. In particular, it has been noted that the cartridge devices of the type described above have a level of abatement of pollutant substances which, with the progressive reduction in levels of emission of polluting substances contemplated by current standards for the near future, does not enable observance of the minimum levels envisaged to be guaranteed.

The purpose of the present invention is to provide a device for reducing atmospheric pollution resulting from internal-combustion exhaust gases of the type described previously, which presents an efficiency of abatement of the pollutant substances that enables observance of the minimum levels envisaged for the near future by current standards regarding abatement of pollutants to be guaranteed.

In accordance with the present invention, a device is provided for reducing atmospheric pollution resulting from exhaust gases, which comprises a casing equipped with an inlet for the exhaust gases to be purified and an outlet for the purified exhaust gases, and cartridge-type purifying means housed in said casing and set between said inlet and said outlet, and comprising mineral fibres; characterized in that said mineral fibres comprise at least 70 wt% of silicon dioxide and at least one of the following metals: platinum in an amount of from 0.001 to 0.5 g per gram of fibre, rhodium in an amount of from 0.00003 to 0.05 g per gram of fibre, and palladium in an amount of from 0.00003 to 0.5 g per gram of fibre.

For a better understanding of the present invention, a preferred embodiment thereof is now described, purely by way of non-limiting example and with reference to the attached drawings, in which:
- Figure 1 is a longitudinal cross-sectional view of a device for reducing atmospheric pollution resulting from exhaust gases;
- Figure 2 is a section taken along the line II-II of Figure 1;
- Figure 3 shows a pad forming part of the device of Figure 1; and
- Figure 4 shows, at an enlarged scale, the structure of a stocking of the pad of Figure 3.

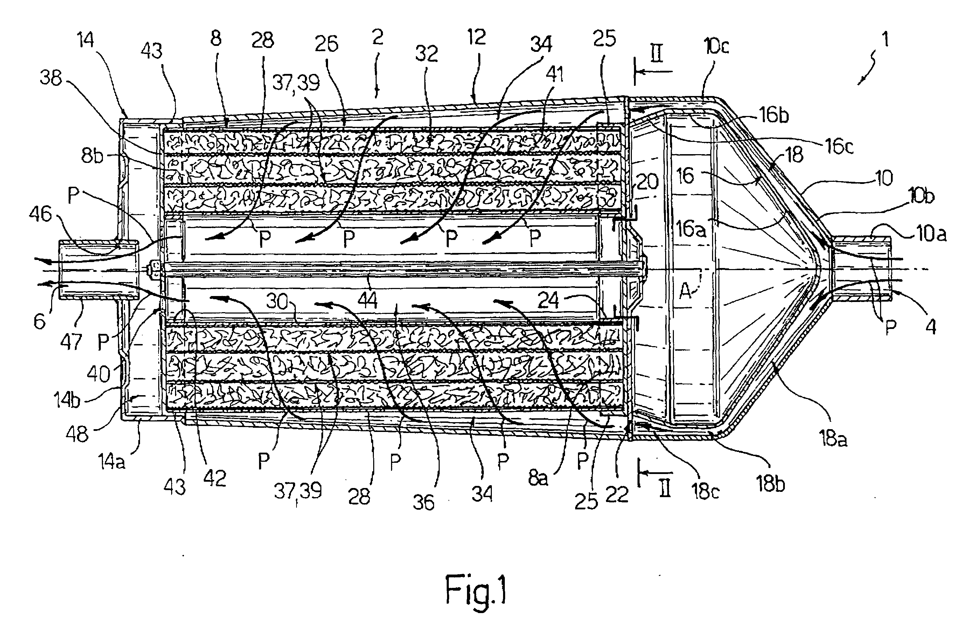

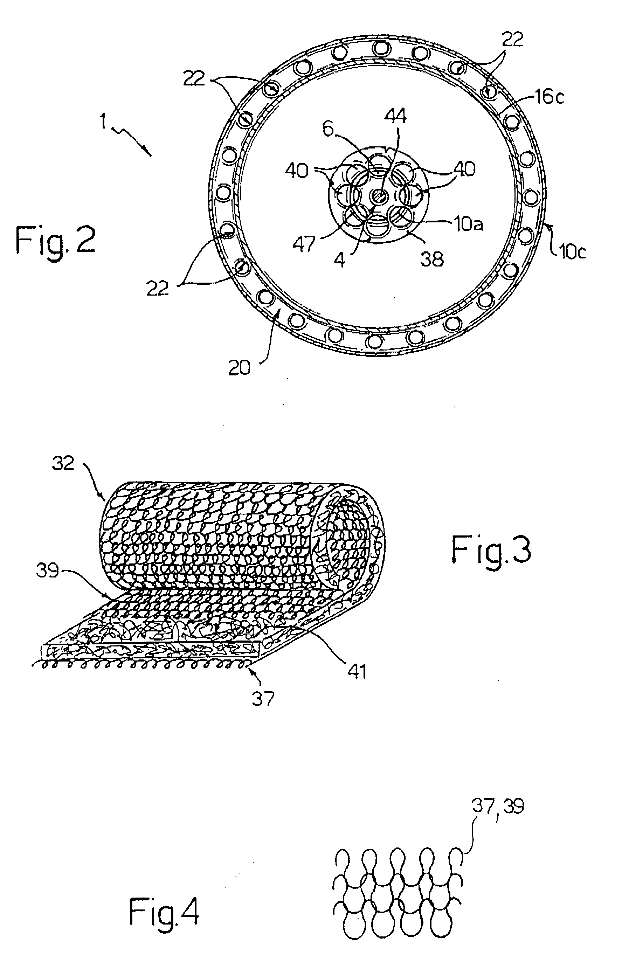

Figures 1 and 2 illustrate a device for reducing atmospheric pollution due to exhaust gases.

The device, designated as a whole by 1, is of the type comprising a hollow casing 2 of a shape elongated along an axis A and provided, at its opposite axial ends, with an inlet 4 for the exhaust gases to be purified and an outlet 6 for the purified exhaust gases, both of which have a circular section; and a tubular cartridge 8 mounted coaxially inside the casing 2 and having an outer diameter greater than the diameters of the inlet 4 and the outlet 6.

The casing 2 comprises three bodies fitted axially together: a first, basically funnel-shaped, end body 10, an intermediate body 12 basically shaped like the frustum of a cone, inside which is set the cartridge 8, and a second, basically cup-shaped, end body 14.

Mounted coaxially inside the first end body 10 is a basically cup-shaped guide body 16 which delimits, together with the first end body 10, a first gap having an annular section which communicates with the inlet 4 and defines an intake duct 18 for the exhaust gases to be purified.

In particular, the first end body 10 comprises a basically cylindrical first portion 10a defining the inlet 4 of the device; a second portion 10b shaped basically like the frustum of a cone, which extends, as an integral part thereof, from the first portion 10a and has a diameter that increases starting from the first portion 10a itself; and a third, basically cylindrical, portion 10c extending, as an integral part thereof, from the second portion 10b.

The guide body 16 comprises a basically conical first portion 16a which internally faces the second portion 10b shaped like a truncated cone of the first end body 10; a second, basically cylindrical, portion 16b extending, as an integral part thereof, from the first portion 16a and facing an initial stretch of the third portion 10c of the first end body 10 and having a larger diameter; and a third portion 16c, shaped like a truncated cone, which extends, as an integral part thereof, from the second portion 16b, faces a terminal stretch of the third portion 10c of the first body 10, and has a diameter that decreases towards the intermediate body 12.

In particular, the second portion 10b, which is shaped like a truncated cone, of the first end body 10 and the first, conical, portion 16a of the guide body 16 are mutually convergent in the direction of the intermediate body 12 in such a way as to define an annular section for the passage of exhaust gases, the said annular section being normal to the direction of advance of the exhaust gases themselves and being substantially constant throughout the length of the portions 10b, 16a themselves, and substantially equal to the section for passage of the exhaust gases defined by the inlet 4, in such a way as not to cause any head loss and not to generate major back pressures.

Preferably, the annular section for passage of the exhaust gases, which is defined by the portions 10b and 16a, is between 80% and 120% of the section for passage of gases defined by the inlet 4.

In the direction of advance of the exhaust gases from the inlet 4 to the outlet 6, the intake duct 18 therefore has an initial stretch 18a delimited by the portion 10b, which is shaped like a truncated cone, and by the conical portion 16a, in which the section for passage of the exhaust gases is substantially constant and equal to the section for passage of gases defined by the inlet 4, and has an increasing mean radius, measured with respect to the axis A; an intermediate stretch 18b, delimited by the cylindrical portions 10c and 16b, in which the section for passage of the gases is substantially constant and equal to the section for passage of the gases defined by the portions 10b and 16a, and has a substantially constant mean radius; and a final stretch 18c delimited by the cylindrical portion 10c and by the portion 16c shaped like a truncated cone, in which the section for passage of the gases increases and has decreasing mean radius.

Mounted coaxially between the first end body 10 and the intermediate body 12 is a first disk-shaped element 20 having a diameter close to that of the first end body 10 and presenting, on one of its own perimetral annular portions set at the terminal stretch of the intake duct 18, a plurality of through holes 22 arranged at equal distances apart to enable passage of the exhaust gases from the intake duct 18 to the intermediate body 12.

The first disk-shaped element 20 further supports, coaxially and in such a way that they project, a pair of centring collars 24, 25, which are respectively internal and external, extending towards the inside of the intermediate body 12, there being set inside said centring collars a first end portion 8a of the cartridge 8.

In particular, the outer centring collar 25 is set so that it corresponds with an outer annular portion of the first disk-shaped element, said annular portion being radially internal with respect to the holes 22, whilst the inner centring collar 24 is set so that it corresponds with an inner annular portion of the first disk-shaped element 20.

The intermediate body 12 extends on the prolongation of the first end body 10 and has a diameter that decreases in the direction of the second end body 14.

Set inside the intermediate body 12 is the tubular cartridge 8, which comprises a basket 26 made up of two rigid tubular metal meshes 28, 30, respectively external and internal, coaxial with the axis A; and a tubular pad 32 set between the two meshes 28, 30. The meshes 28, 30 are preferably obtained by stretching from oriented stainless-steel sheets of the type suitable for withstanding high temperatures and with an orientation such as to direct the flow of gas towards the inside of the cartridge 8.

The external mesh 28 has a diameter smaller than the minimum diameter of the intermediate body 12 and delimits, together with the intermediate body 12 itself, a second gap having an annular section and defining an outer collection chamber 34 containing, during use, the exhaust gases to be purified.

In particular, the outer collection chamber 34 completely surrounds the cartridge 8, is set coaxially on the extension of the intake duct 18, and communicates with the latter through the holes 22, and presents a section for passage of the exhaust gases which progressively decreases in the direction of advance of the gases.

The internal mesh 30, instead, delimits a cylindrical inner collection chamber 36 which, during use, contains the purified exhaust gases that have radially traversed the pad 32.

The second end body 14 comprises a first cylindrical portion 14a fitted to the intermediate body 12 and a bottom wall 14b provided with an axial through hole 46 in which a cylindrical element 47 is set which extends outwards and defines the outlet 6 of the device 1.

Mounted coaxially and in a sliding and sealed way inside the second end body 14 is a second disk-shaped element 38 which is set parallel to, and at a distance from, the bottom wall 14b of the second end body 14 itself, and presents, on an internal annular portion set so that it corresponds to the inner collection chamber 36, a plurality of through holes 40 set at angular equal distances apart to enable passage of the exhaust gases from the inner collection chamber 36 itself to the second end body 14.

The space between the bottom wall 14b of the second end body 14 and the second disk-shaped element 38 defines a chamber 48 which enables axial movement of the second disk-shaped element 38 resulting from thermal expansion of the cartridge 8 and of the various parts of the device 1 which inevitably occurs during operation of the device 1.

The second disk-shaped element 38 further supports, coaxially and in a projecting way, a pair of centring collars 42, 43, respectively internal and external, which extend towards the intermediate body 12, and inside which there is set a second end portion 8b of the cartridge 8.

In particular, the internal centring collar 42 is set in a position corresponding to an internal annular portion of the second disk-shaped element 38 that surrounds the holes 40 externally, whilst the external centring element 43 is set in a position corresponding to the perimetral annular portion of the second disk-shaped element 38.

The centring collars 24, 25, 42, 43 withhold the cartridge 8 axially in the working position by means of a tie rod 44 which is coaxial with the axis A and has opposite ends fitted to the disk-shaped elements 20, 38 in a way of itself known and hence not described in detail herein.

The material of which the tie rod 44 is made is of the same type as the one of which the meshes 28, 30 of the basket 26 of the cartridge 8 are made, so as to have a thermal expansion that is substantially the same as that of the meshes 28, 30 themselves.

As shown in greater detail in Figure 3, the pad 32 comprises a first stocking 37 and a second stocking 39 made of woven filiform material enclosing, in sandwich fashion, purifying mineral fibres 41 which are wound in a spiral in such a way as to define basically an alternation of layers of filiform material and mineral fibres between the inlet 4 and the outlet 6.

As shown in detail in Figure 4, each stocking 37, 39 consists of a plurality of elastically deformable free loops conveniently obtained by mechanical weaving of a thin stainless-steel wire that is particularly suitable for resisting high temperatures, such as the temperatures of the exhaust gases of internal-combustion engines.

According to the present invention, the mineral fibres 41 comprise at least 70 wt% of silicon dioxide (SiO₂) and at least one of the following metals: platinum in an amount of from 0.001 to 0.5 g per gram of mineral fibre, rhodium in an amount of from 0.00003 to 0.05 g per gram of mineral fibre, and palladium in an amount of from 0.00003 to 0.5 g per gram of mineral fibre.

It has been in fact surprisingly found by the present applicant that the combination of the elements described above, i.e., a cartridge having the structure illustrated previously and comprising amorphous mineral fibres in which there is present at least 70 wt% of silicon dioxide and at least one of the metals mentioned in the amounts given makes it possible to obtain a device for reducing pollution with a level of abatement of the pollutant substances sufficient to meet the requirements contemplated for the near future by the current standards regarding emission of pollutant substances, whatever the application for which the device 1 is to be used.

In particular, the present applicant has verified experimentally that the abatement of carbon oxides, unburnt hydrocarbons, carbon particulate, and smoke is, in any application of the device 1, always greater than 20%, and may even reach the value of 50%, whilst the abatement of nitrogen oxides is always greater than 5%, and may even reach a value of 10%.

Preferably, in the mineral fibres 41 platinum is present in an amount of from 0.005 to 0.030 g per gram of fibre, rhodium is present in an amount of from 0.0003 to 0.0025 g per gram of fibre, and palladium is present in an amount of from 0.0003 to 0.03 g per gram of fibre.

It has in fact been experimentally verified that, using such quantities, the abatement of carbon oxides, unburnt hydrocarbons, carbon particulate, and smoke is, in any application of the device 1, always greater than 40%, and may even reach the value of 90%, whilst the abatement of nitrogen oxides is always greater than 10%, and may even reach a value of 60%.

More preferably still, the silicon dioxide is of an amorphous type, and the mineral fibres 41 have a mean diameter greater than or equal to 8 µm.

It is moreover emphasized that the final composition of the mineral fibres 41, i.e., the specific amount of silicon dioxide, which of the metals referred to must be added to the silicon dioxide, as well as the specific amounts of these metals, depends upon many factors, such as the type of diesel engine (induction, supercharged) to which the device 1 is associated, the power of the engine (small, medium, high), and the type of application (town driving, out-of-town driving, motorway, production of energy, etc.).

It is moreover emphasized that in the mineral fibres 41 there may also possibly be present even impurities or traces of compounds of the aforementioned metals, in quantities such, however, as to be negligible as compared to the values given above.

During use, the path P of the exhaust gases from the inlet 4 to the outlet 6 is illustrated in Figure 1 by a marked line.

In particular, the exhaust gases enter the device 1 through the inlet 4, traverse the intake duct 18, pass through the holes 22 made in the first disk-shaped element 20, and reach the outer collection chamber 34 surrounding the cartridge 8, the progressively decreasing annular section of which contributes to forcing the exhaust gases to pass radially through the cartridge 8, inside which they are purified.

The purified exhaust gases then reach the inner collection chamber 36, and from this, through the holes 40 made in the second disk-shaped element 38, enter the second end body 14, from which they come out of the device 1 through the outlet 6.

In particular, the exhaust gases which initially occupy a concentrated cylindrical volume defined by the inlet 4 are progressively forced to occupy a distributed volume having an annular shape defined by the outer collection chamber 34, and, during their passage from the inlet 4 to the outer collection chamber 34, they dissipate a large part of their kinetic energy as a result of the following three phenomena:
- distribution of the exhaust gases in a distributed volume which takes place during passage inside the initial stretch 18a of the intake duct 18;
- expansion of the exhaust gases which occurs in the final stretch 18c of the intake duct 18, in which the section of passage of the gases increases progressively; and
- "sliding" of the discharge gases against the inner surface of the outer collection chamber 34, which occurs during distribution of the exhaust gases inside the outer collection chamber 34.

In detail, during distribution of the exhaust gases inside the outer collection chamber 34, the exhaust gases lap against the inner surface of the said chamber and, according to the Stefan-Boltzmann law of the blackbody, there occurs, by radiation, a certain stabilization of the temperature of the exhaust gases towards maximum values of 400-500°C, i.e., much lower than those (around 650°C) that occur in known devices in which the exhaust gases enter the inner collection chamber, and the said stabilization contributes to maintaining the re-oxidization values of the sulphates present in the exhaust gases low.

The stabilization of the temperature of the exhaust gases at around maximum values of 400-500°C results in a reduction in the enthalpy of the system and in the specific volume of the exhaust gases as compared to known devices, and these factors bring about a reduction in the speed of impact of the exhaust gases on the pad 32 of the cartridge 8, which results in a reduction in the kinetic energy of the gases in quadratic proportion to the reduction in speed.

The reduction in the kinetic energy possessed by the exhaust gases thus means that the radial traversing of the cartridge 8 of the outer collection chamber 34 to the inner collection chamber 36 takes place in a less violent way than instead occurs in traditional devices in which traversing of the cartridge occurs from the inside to the outside by expansion, and hence the pad 32 is subjected to a considerably lower mechanical stress than the stress to which pads of traditional devices are subjected.

From an examination of the characteristics of the device 1 made according to the present invention the advantages that it affords are evident.

Finally, it is clear that numerous modifications and variations may be made to the device 1 described and illustrated herein, without thereby departing from the sphere of protection of the present invention.

For example, the device 1 could have a structure different from the one previously described, for example a structure like the one illustrated in the above-mentioned European patent EP-B-0340784, in which the inlet 4 communicates with the inner collection chamber 36, whilst the outlet 6 communicates with the outer collection chamber 34. In this case, the exhaust gases to be purified enter the inner collection chamber 36, radially traverse, by expansion, the pad 32, thus being purified by the mineral fibres contained therein, and from the outer collection chamber 34 they are conveyed towards the outlet of the device 1.

In addition, the pad 32 could also comprise only one of the stockings 37, 39, which, when wound in a spiral together with the mineral fibres 41, enables even so definition of an alternation of layers of filiform material and of mineral fibres between the inlet 4 and the outlet 6 of the device 1.

## Claims

1. A device (1) for reducing atmospheric pollution due to exhaust gases, comprising a casing (2) provided with an inlet (4) for the exhaust gases to be purified and an outlet (6) for the exhaust gases that have been purified; and cartridge purification means (8) housed inside said casing (2) and set between said inlet (4) and said outlet (6) and comprising mineral fibres (41); characterized in that said mineral fibres (41) comprise at least 70 wt% of silicon dioxide and at least one of the following metals: platinum in an amount from 0.001 to 0.5 g per gram of fibre, rhodium in an amount of from 0.00003 to 0.05 g per gram of fibre, and palladium in an amount of from 0.00003 to 0.5 g per gram of fibre.

2. A device according to Claim 1, characterized in that platinum is present in an amount of from 0.005 to 0.030 g per gram of fibre, rhodium is present in an amount of from 0.0003 to 0.0025 g per gram of fibre, and palladium is present in an amount of from 0.0003 to 0.03 g per gram of fibre.

3. A device according to Claim 1 or Claim 2, characterized in that said silicon dioxide is amorphous.

4. A device according to any one of the preceding claims, characterized in that said fibres have a mean diameter greater than or equal to 8 µm.

5. A device according to any one of the preceding claims, characterized in that said cartridge purifying means (8) comprise supporting means (37, 39) for said mineral fibres (41), essentially consisting of a woven filiform material; said supporting means (37, 39) and said mineral fibres (41) being set in such a way as to define, between said inlet (4) and said outlet (6), substantially an alternation of layers of filiform material (37, 39) and layers of mineral fibres (41).

6. A device according to Claim 5, characterized in that said supporting means (37, 39) are made of stainless steel.

7. A device according to Claim 5 or Claim 6, characterized in that said supporting means comprise a stocking (37, 39) of filiform material having a plurality of elastically deformable free loops.

8. A device according to Claim 7, characterized in that said stocking (37, 39) is conveniently obtained by mechanical weaving of a stainless-steel wire particularly suited for withstanding high temperatures.

9. A device according to Claim 7 or Claim 8, characterized in that said supporting means comprise a pair of said stockings (37, 39) enclosing said mineral fibres (41) in sandwich fashion.

10. A device according to any one of the claims from 5 to 9, characterized in that said supporting means (37, 39) and said mineral fibres (41) are wound to form a spiral and define a tubular pad (32) mounted in such a way that it is set between an inner metal mesh (30) and an outer metal mesh (28).

11. A device according to Claim 10, characterized in that said inner metal mesh (30) and said outer metal mesh (28) are made of stainless steel of a type suited for withstanding high temperatures.

12. A device according to Claim 10 or Claim 11, characterized in that said inner metal mesh (30) and said outer metal mesh (28) are conveniently made by stretching from oriented stainless-steel sheets set with an orientation such as to direct the flow of the gases towards the inside of said cartridge purification means (8).

13. A device for reducing atmospheric pollution due to exhaust gases, substantially as described with reference to the attached drawings.
